# EUROPÄISCHE PATENTANMELDUNG

(11) **EP 4 721 886 A1**
(43) Veröffentlichungstag der Anmeldung: **08.04.2026**
(21) Anmeldenummer: 25198063.7
(22) Anmeldetag: 26.08.2025
(51) Int. Cl.: B08B 3/08, B08B 3/10, B08B 3/14

(54) **ANLAGE ZUR ENTFETTUNG UND REINIGUNG VON WERKSTÜCKEN**

(30) Priorität: 01.10.2024 DE 102024128372
(71) Anmelder: Pero Aktiengesellschaft P. Erbel Maschinen- und Apparatebau, 86343 Königsbrunn (DE)
(72) Erfinder: Daldrup, Jens, 86863 Langenneufnach (DE); Erbel, Gerd, 86156 Augsburg (DE)
(74) Vertreter: Charrier Rapp & Liebau

(57) **Zusammenfassung**

Die Erfindung betrifft eine Anlage zur Entfettung und Reinigung von Werkstücken mit einem organischen Lösemittel, mit mindestens einer Behandlungskammer (1) und einer mit einer Heizung (4) beheizbaren ersten Destillationseinheit (3) zum Verdampfen des Lösemittels, mit mindestens einem eine Verschmutzung des Lösemittels detektierenden Sensor (S1-S6) und einer Steuerungseinrichtung (6), durch welche die Heizung der ersten Destillationseinheit (3) in Abhängigkeit von der Verschmutzung des Lösemittels derart regelbar ist, dass die Heizleistung der Verschmutzung des Lösemittels angepasst wird. Bekannte derartige Anlagen weisen eine ungenügende Messgenauigkeit auf. Die Aufgabe, eine derartige Anlage so weiterzubilden, dass die Messung der Verschmutzung optimiert wird und einer digitalen Auswertung zugänglich ist, wird dadurch gelöst, dass der Sensor (S1-S6) ein optischer Sensor ist und eine Laserdiode (8) außerhalb des Lösemittel enthaltenden Volumens und einer Reflektionsfläche (9) innerhalb des Lösemittel enthaltenden Volumens umfasst.

## Beschreibung

Die Erfindung betrifft eine Anlage zur Entfettung und Reinigung von Werkstücken nach dem Oberbegriff des Anspruchs 1.

Gegenstand der EP 1 249 263 B1 ist ein Verfahren zur Behandlung eines zu reinigenden Guts in einer Reinigungsanlage, welche eine verschließbare Arbeitskammer zur Behandlung des zu reinigenden Guts mit einem Lösemittel, einem Dampferzeuger zur Erzeugung eines Lösemittel-Sattdampfs, eine Vakuumpumpe zum Abpumpen des Lösemittel-Sattdampfs aus der Arbeitskammer nach der Behandlung des zu reinigenden Guts mit dem Lösemittel-Sattdampf, einen Kondensator zur Kondensation des Lösemitteldampfs und eine Pumpe zur Rückführung des Lösemittelkondensats in einen Vorratsbehälter enthält.

Ähnliche Verfahren und Vorrichtungen sind Gegenstand der EP 0 581 113 A1, der DE 101 18 601 C1 und der DE 199 39 032 A1.

Die DE 10 2016 000 300 A1 beschreibt ein Verfahren zur Aufbereitung eines in einer Anlage zur Oberflächenbehandlung eines Gegenstands benutzten Lösungsmittels, bei dem das von einer Arbeitskammer der Oberflächenbehandlungsanlage abgeführte Lösungsmittel zumindest mittelbar in einem Speichertank der Lösungsmittelaufbereitungsanlage rückgeführt wird, und bei dem das Lösungsmittel in einer Destillationseinrichtung destilliert, in einer Kondensationseinrichtung kondensiert und dann dem Speichertank zugeführt wird, wobei der Verschmutzungsgrad des Lösungsmittels von mindestens einem Sensor erfasst wird, wobei die Sensorsignale des oder der Sensoren einer Steuereinrichtung zugeführt werden und wobei die Steuereinrichtung in Abhängigkeit von dem Verschmutzungsgrad des Lösungsmittels zumindest die Leistung der Destillationseinrichtung über die Heizung steuert.

Das bei einem derartigen Verfahren verwendete Lösemittel ist in der Regel ein modifizierter Alkohol, ein chlorierter Kohlenwasserstoff oder ein anderes organisches Lösemittel mit einem Flammpunkt von über 55°C. Da verschmutzte und fettige Metallteile durch das Lösemittel gereinigt werden, verschmutzt das Lösemittel im Laufe der Zeit und die Reinigungsleistung nimmt ab. Die in der Vorrichtung vorhandene Destillationseinheit wird einerseits zum Dampfentfetten des zu reinigenden Metalls verwendet, jedoch auch zur dauerhaften Destillation des Reinigungsmittels. Hierbei wird das Reinigungsmittel durch Destillation in der Destillationseinheit von Öl und anderen Verunreinigungen befreit. Die Heizleistung der Destillationseinheit muss demnach dem Grad der Verunreinigung des Lösemittels angepasst werden, wobei bei den aus den Stand der Technik bekannten Verfahren immer eine zu hohe Heizleistung verwendet wird, um mit Sicherheit zu gewährleisten, dass eine ordnungsgemäße Destillation stattfindet und ein sauberes Lösemittel erzeugt wird. Dies erfordert jedoch einen erheblichen Einsatz an Energie zur Heizung der Destillationseinheit, was bei gering verschmutzten Metallteilen und damit gering verschmutzten Lösemittel zu einem unnötigen Energieeinsatz führt und damit hohe Energiekosten erzeugt werden.

Es besteht daher die Aufgabe, eine derartige Anlage so weiterzubilden, dass die Messung der Verschmutzung optimiert wird und einer digitalen Auswertung zugänglich ist.

Gelöst wird diese Aufgabe mit den kennzeichnenden Merkmalen des Anspruchs 1. Vorteilhafte Ausgestaltungen sind den Unteransprüchen entnehmbar.

Gegenstand des Anspruchs 1 ist eine Anlage zur Entfettung und Reinigung von Werkstücken mittels eines organischen Lösemittels mit mindestens einer Behandlungskammer und einer mit einer Heizung beheizbaren ersten Destillationseinheit zum Verdampfen des Lösemittels, sowie mit mindestens einen eine Verschmutzung des Lösemittels detektierenden Sensor und eine Steuerungseinrichtung, welche die Heizung der ersten Destillationseinheit in Abhängigkeit von der Verschmutzung des Lösemittels derart regelt, dass die Heizleistung der Verschmutzung des Lösemittels angepasst wird. Der Sensor ist hierbei ein optischer Sensor, insbesondere ein Absorptionssensor, und umfasst eine Laserdiode außerhalb des Lösemittel enthaltenden Volumens und eine Reflektionsfläche innerhalb des Lösemittel enthaltenden Volumens.

Hierdurch wird gewährleistet, dass bei geringer Verschmutzung der Reinigungsflüssigkeit eine geringe Heizleistung eingesetzt wird und erst bei höherer Verschmutzung der Reinigungsflüssigkeit die energieintensive Heizung hochgeregelt wird.

Die Heizung kann insbesondere elektrisch oder dampfbetrieben sein, um eine Anpassung an die Gegebenheiten der Anlage und ihrer Energieversorgung zu erzielen.

Vorteilhafterweise befindet sich der Sensor an einer Destillationseinheit und/oder einem Lösemittelbad und/oder an einer Behandlungskammer und/oder innerhalb einer der Rohrleitungen und/oder im Wasserabscheider der Anlage.

Vorzugsweise befindet sich der Sensor in einem oberen Bereich des Vorratsbehälters und kann neben der Absorption die optische Weglänge zwischen der Laserdiode und dem Reflektor ermitteln und bei Überschreiten eines Schwellwerts der optischen Weglänge ein Signal bezüglich eines sinkenden Füllstands des Vorratsbehälters ausgeben. Die optische Weglänge verändert sich, sobald keine Reinigungsflüssigkeit mehr zwischen Laserdiode und Reflektor vorhanden ist, wodurch der Sensor auch als Füllstandsensor Verwendung findet.

Vorzugsweise kann die Messung der Absorption auch zeitaufgelöst erfolgen, wobei dann ein Peak in der Messkurve das Vorhandensein eines reflektierenden Partikels zwischen der Laserdiode und dem Reflektor anzeigt. Auf diese Weise kann nicht nur eine homogene Verschmutzung gemessen werden, sondern auch das Vorhandensein von Metallpartikeln in der Reinigungsflüssigkeit.

Vorzugsweise kann die Anzahl der Peaks in der Messkurve in der Steuerungseinrichtung ausgewertet werden, wodurch damit die Menge vorhandener Partikel berechnet wird.

In einer bevorzugten Ausgestaltung kommt eine zweite Destillationseinheit zum Einsatz, welche in Abhängigkeit von der detektierten Verschmutzung des Lösemittels von der Steuerungseinrichtung zu- oder abgeschaltet wird.

In einer bevorzugten Ausführungsform ist ein erster Sensor S1 knapp unter dem Mindeststand der Flüssigkeit in der Destillationseinheit vorgesehen sowie ein weiterer Sensor S2, der den Dampfraum oberhalb dieses Flüssigkeitsstandes überwacht. Hierbei kann der zweite Sensor S2 den Dampf auf Schaumfreiheit und / oder Reinheit überwachen.

Ein Ausführungsbeispiel der Erfindung wird im Folgenden unter Bezugnahme auf die begleitenden Zeichnungen näher erläutert. Diese zeigen
**Fig.1** einen schematischen Aufbau einer erfindungsgemäßen Anlage, und
**Fig. 2** einen Querschnitt durch den Einbaubereich eines optischen Absorptionssensors.

Nachfolgend wird die Anlage schematisch beschrieben, wobei der Gegenstand der Erfindung sich nicht auf den exakten Aufbau einer solchen Anlage bezieht welche dem Fachmann prinzipiell bekannt ist. Es werden daher nicht sämtliche Leitungen, Ventile, Pumpen und sonstige Bauteile der Anlage im Detail beschrieben, sondern es wird insoweit auf bekannte Anlagen verwiesen wie sie beispielsweise Gegenstand der DE 101 18 601 C1 sind.

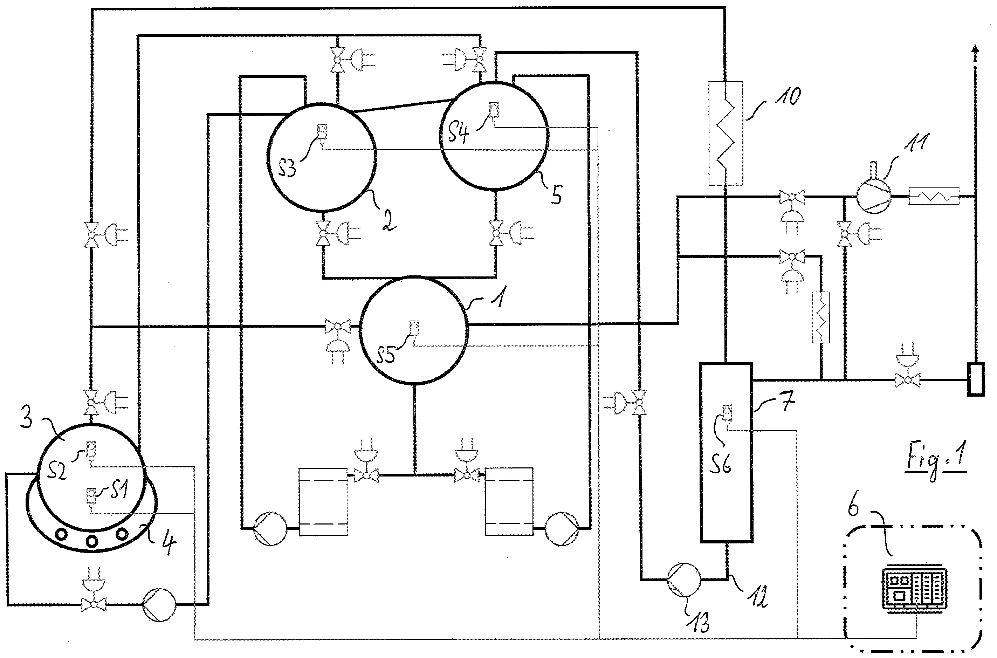

Die in Fig. 1 schematisch dargestellte Reinigungsanlage enthält eine Destillationseinheit 3, in der flüssiges Lösemittel zur Erzeugung eines gesättigten Lösemitteldampfs erhitzt wird. Von der Destillationseinheit 3 führt eine Dampfleitung mit einem darin angeordneten Absperrventil zu einer druckdicht verschließbaren Behandlungskammer 1, in der die zu reinigenden Teile während des Reinigungsvorgangs untergebracht sind. Von der Destillationseinheit 3 führt eine weitere Dampfleitung zu einem Wärmetauscher 10. Die Behandlungskammer 1 ist mit einer ersten Vakuumpumpe 11 verbunden. Die erste Vakuumpumpe 11 steht außerdem mit dem Wärmetauscher 10 und weiteren Behältern, Rohrleitungen und Pumpen in Verbindung.

Die Destillationseinheit 3 ist mit einer Heizung 4 beheizt, wobei es sich um eine elektrische, dampfbetriebene oder anderweitig mit Energie versorgte Heizung 4 handeln kann.

Von dem Wasserabscheider 7 führt eine Leitung 12 zu einer Kreiselpumpe 13, durch die das Lösemitteldestillat in das zweite Lösemittelbad 5 gepumpt werden und anschließend in die Behandlungskammer 1 gelangen kann.

Die Arbeitsweise der Reinigungsanlage ist wie folgt: Vor dem eigentlichen Reinigungsbetrieb wird über die Vakuumpumpe 11 zunächst die im System befindliche Luft abgesaugt. Wenn das System luftleer ist, kann eine kontinuierliche Destillation erfolgen. Dabei strömt der in der Destillationseinheit 3 erzeugte Lösemitteldampf zu dem Wärmetauscher 10 und wird dort verflüssigt. Das aus dem Wärmetauscher 10 austretende Kondensat gelangt in den Wasserabscheider 7. Das dort vom Wasser getrennte Destillat wird durch die Kreiselpumpe 13 über die Leitung 12 wieder in das zweite Lösemittelbad 5 eingeleitet. Durch die kontinuierliche Destillation und die Nachführung von sauberem Destillat in die Reinigungsbäder werden diese stetig verdünnt. Durch den kaskadenartigen Überlauf werden somit die eingebrachten Verschmutzungen in der Destillationseinheit angesammelt.

Nachdem die Behandlungskammer 1 mit den zu reinigenden Teilen befüllt und verschlossen und von der Vakuumpumpe 11 evakuiert wurde, kann die eigentliche Reinigung der Teile nach einem auswählbaren Reinigungsprogramm erfolgen.

Zum Reinigen der Teile in einem Reinigungsbad kann die Behandlungskammer 1 mit dem im ersten Lösemittelbad 2 erwärmten Lösemittel gefüllt werden. Nach Beendigung der Badreinigung wird das Lösemittel abgelassen und kann wieder in den das Lösemittelbad 5 zurückgeführt werden.

Erfindungsgemäß befindet sich an einer geeigneten Stelle der beschriebenen Anlage mindestens ein eine Verschmutzung des Lösemittels detektierender Sensor S1-S6. Dieser Sensor S3 bzw. S4 kann sich an einem ersten Lösemittelbad 2 und / oder an einem zweiten Lösemittelbad 5 befinden. Alternativ oder kumulativ kann sich der Sensor S5 an einer Behandlungskammer 1 befinden. Wiederum alternativ oder kumulativ hierzu kann sich der Sensor S6 im Wasserabscheider 7 oder innerhalb einer Rohrleitung der Anlage befinden.

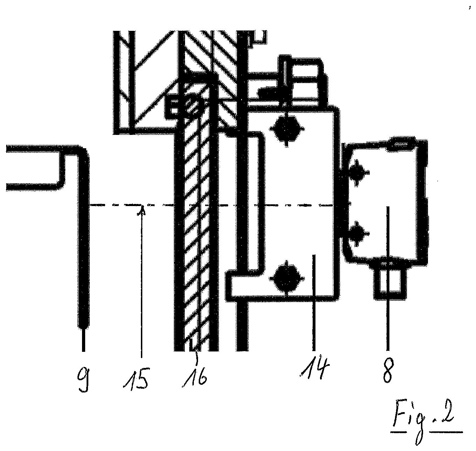

Im nachfolgend unter Bezugnahme auf Fig. 2 beschriebenen Ausführungsbeispiel ist der oder jeder Sensor S1-S6 jedoch ein optischer Sensor, insbesondere ein optischer Absorptionssensor. Der Sensor S1-S6 umfasst hierbei eine an einer Halterung 14 befestigte Laserdiode 8 außerhalb des Lösemittel enthaltenden Volumens und eine Reflektionsfläche 9 innerhalb des Lösemittel enthaltenden Volumens. Die beiden Volumina sind durch eine Glasscheibe 16 voneinander getrennt. Der Laserstrahl 15 der Laserdiode 8 ist auf die Reflektionsfläche 9 gerichtet und wird von dieser wieder zu der Laserdiode 8 reflektiert und dort mit Hilfe eines der Laserdiode 8 zugeordneten lichtempfindlichen Elements empfangen und der weiteren Auswertung zugeführt. Mit einer abnehmenden Verschmutzung des Lösemittels wird durch das Lösemittel weniger Licht absorbiert und es gelangt mehr Licht in das der Laserdiode 8 zugeordnete lichtempfindliche Element.

Die genannte weitere Auswertung erfolgt durch eine Steuerungseinrichtung 6, welche die Heizung 4 der ersten Destillationseinheit 3 in Abhängigkeit von der Verschmutzung des Lösemittels derart regelt, dass die Heizleistung der Verschmutzung des Lösemittels angepasst wird. Bei einer geringen Verschmutzung des Lösemittels ist somit auch nur eine geringe Leistung der Heizung 4 erforderlich und damit ein geringer Energieverbrauch möglich. Bei einer zunehmenden Verschmutzung des Lösemittels wird die Heizung 4 durch die Steuerungseinrichtung 6 hochgeregelt bis die Verschmutzung des Lösemittels wieder abnimmt und die Heizung 4 wieder heruntergefahren werden kann.

Mit der erfindungsgemäßen Anlage lässt sich also der Verschmutzungsgrad des Lösemittels erfassen und die Heizung 4 der Destillationseinheit 3 abhängig von dem gemessenen Verschmutzungsgrad derart regeln, dass der Energieverbrauch der Heizung 4 minimiert wird.

Die Erfindung bietet j edoch weitere Einsatzmöglichkeiten und Vorteile.

So können sich die Sensoren S3 und S4 in den Lösemittelbädern 2 bzw. 5 in einem oberen und/oder unteren Bereich eines Lösemittelbads 2 bzw. 5 befinden und mit Hilfe der Steuerungseinrichtung 6 neben der Absorption die optische Weglänge zwischen Laserdiode 8 und Reflektionsfläche 9 ermitteln. Diese ist bei Vorhandensein von Lösemittel im Bereich der Sensoren S3 bzw. S4 innerhalb eines Toleranzbereichs, der auch von Druck und Temperatur in diesem Bereich abhängt. Verbleibt die gemessene optische Weglänge des Laserstrahls 15 innerhalb dieses Toleranzbereichs wird lediglich die Absorption gemessen und daraus auf den Grad der Verschmutzung des Lösemittels geschlossen. Ein Überschreiten eines Schwellwerts der optischen Weglänge des Laserstrahls 15 über diesen Toleranzbereich hinaus ist hingegen ein Zeichen dafür, dass sich kein Lösemittel mehr im Messbereich des Sensors S3 bzw. S4 befindet. Daraufhin kann die Steuerungseinrichtung 6 ein Signal bezüglich eines sinkenden Füllstandes in diesem Bereich ausgeben.

Alternativ oder kumulativ kann sich auch ein Sensor S5 in der Behandlungskammer 1 befinden und mit Hilfe der Steuerungseinrichtung 6 neben der Absorption die optische Weglänge des Laserstrahls 15 zwischen der Laserdiode 8 und der Reflektionsfläche 9 ermitteln. Diese ist bei Vorhandensein von Lösemittel im Bereich des Sensoren S5 ebenfalls innerhalb des genannten Toleranzbereichs. Ein Überschreiten eines Schwellwerts der optischen Weglänge über diesen Toleranzbereich hinaus ist hingegen ein Zeichen dafür, dass sich kein Lösemittel mehr im Messbereich des Sensors S5 befindet. Daraufhin kann auch hier die Steuerungseinrichtung 6 ein Signal bezüglich eines sinkenden Füllstandes in diesem Bereich ausgeben was zu einer automatischen oder manuellen Beeinflussung der Anlage führen kann.

Die Messung der Absorption durch die Sensoren S1-S6 kann ferner zeitaufgelöst erfolgen und in der Steuerungseinrichtung kann der Absorptionsgrad über die Zeit ausgewertet werden. Falls die Verschmutzung des Lösemittels durch vollständig gelöste Stoffe oder Kolloide verursacht ist ergibt sich keine Abhängigkeit des Absorptionsgrades von der Zeit. Falls allerdings metallisch reflektierende Partikel in Lösung sind, führt dies zu Peaks in der Messkurve sobald ein solches Partikel sich im Strahlengang zwischen Laserdiode 8 und Reflektionsfläche 9 befindet. Ein Peak kann positiv sein, wenn das Partikel Licht in den optischen Erfassungsbereich bei der Laserdiode 8 reflektiert oder negativ, wenn das Partikel den Strahlengang behindert.

Die Steuerungseinrichtung 6 kann hierbei die Anzahl der Peaks in der Messkurve auswerten und damit die Menge vorhandener Partikel berechnen und somit auf den Verschmutzungsgrad des Lösemittels durch derartige Partikel schließen.

Vorzugsweise weist die Destillationseinheit einen ersten Sensor S1 knapp unter dem Mindeststand der Flüssigkeit auf und einen weiteren Sensor S2 über diesem Flüssigkeitsstand zur Überwachung des Dampfraumes. Der Sensor S2 überwacht hierbei auch die Schaumfreiheit bzw. Reinheit des Dampfes.

Nicht dargestellt ist schließlich eine Weiterbildung der beschriebenen Ausführung wonach eine zweite Destillationseinheit vorgesehen ist, welche in Abhängigkeit von der detektierten Verschmutzung des Lösemittels von der Steuerungseinrichtung 6 zu- oder abgeschaltet wird. Hierdurch lässt sich bei geringer Verschmutzung ein energiesparender Betrieb mit nur einer Destillationseinheit 3 ermöglichen, während für kurzzeitige starke Verschmutzungen eine weitere Destillationseinheit zur Verfügung steht.

### Bezugszeichenliste:

- 1: Behandlungskammer
- 2: Erstes Lösemittelbad
- 3: Destillationseinheit
- 4: Heizung
- 5: Zweites Lösemittelbad
- 6: Steuerungseinrichtung
- 7: Wasserabscheider
- 8: Laserdiode
- 9: Reflektionsfläche
- 10: Wärmetauscher
- 11: Vakuumpumpe
- 12: Leitung
- 13: Kreiselpumpe
- 14: Halterung
- 15: Laserstrahl
- 16: Glasscheibe

## Patentansprüche

1. Anlage zur Entfettung und Reinigung von Werkstücken mit einem organischen Lösemittel, mit mindestens einer Behandlungskammer (1) und einer mit einer Heizung (4) beheizbaren ersten Destillationseinheit (3) zum Verdampfen des Lösemittels, mit mindestens einem eine Verschmutzung des Lösemittels detektierenden Sensor (S1-S6) und einer Steuerungseinrichtung (6), durch welche die Heizung der ersten Destillationseinheit (3) in Abhängigkeit von der Verschmutzung des Lösemittels derart regelbar ist, dass die Heizleistung der Verschmutzung des Lösemittels angepasst wird, **dadurch gekennzeichnet, dass** der Sensor (S1-S6) ein optischer Sensor ist und eine Laserdiode (8) außerhalb des Lösemittel enthaltenden Volumens und einer Reflektionsfläche (9) innerhalb des Lösemittel enthaltenden Volumens umfasst.

2. Anlage nach Anspruch 1, **dadurch gekennzeichnet, dass** die Heizung (4) eine elektrisch betriebene Heizung (4) ist.

3. Anlage nach Anspruch 1, **dadurch gekennzeichnet, dass** die Heizung (4) eine dampfbetriebene Heizung (4) ist.

4. Anlage nach einem der voranstehenden Ansprüche, **dadurch gekennzeichnet, dass** sich einer der Sensoren (S3) an einem ersten Lösemittelbad (2) und einer der Sensoren (S4) an einem zweiten Lösemittelbad (5) befindet.

5. Anlage nach einem der voranstehenden Ansprüche, **dadurch gekennzeichnet, dass** sich einer der Sensoren (S5) an der Behandlungskammer (1) befindet.

6. Anlage nach einem der voranstehenden Ansprüche, **dadurch gekennzeichnet, dass** sich einer der Sensoren (S6) an einem Wasserabscheider (7) oder innerhalb einer Rohrleitung befindet.

7. Anlage nach einem der voranstehenden Ansprüche, **dadurch gekennzeichnet, dass** mindestens einer der Sensoren (S1-S6) ein kapazitiver Sensor ist.

8. Anlage nach Anspruch 7, **dadurch gekennzeichnet, dass** sich einer der Sensoren (S1-S6) in einem oberen und / oder unteren Bereich eines Lösemittelbads (2, 5) und / oder der Behandlungskammer (1) befindet und neben der Absorption die optische Weglänge zwischen Laserdiode (8) und Reflektionsfläche (9) ermittelt und bei Überschreiten eines Schwellwerts der optischen Weglänge ein Signal bezüglich eines sinkenden Füllstandes ausgibt.

9. Anlage nach einem der Ansprüche 7 oder 8, **dadurch gekennzeichnet, dass** die Messung der Absorption zeitaufgelöst ist und ein Peak in der Messkurve das Vorhandensein eines reflektierenden Partikels zwischen der Laserdiode (8) und der Reflektionsfläche (9) anzeigt.

10. Anlage nach Anspruch 9, **dadurch gekennzeichnet, dass** die Anzahl der Peaks in der Messkurve in der Steuerungseinrichtung (6) ausgewertet wird und damit die Menge vorhandener Partikel berechnet wird.

11. Anlage nach einem der voranstehenden Ansprüche, **gekennzeichnet durch** eine zweite Destillationseinheit welche in Abhängigkeit von der detektierten Verschmutzung des Lösemittels von der Steuerungseinrichtung (6) zu- oder abgeschaltet wird.

12. Anlage nach einem der voranstehenden Ansprüchen, **dadurch gekennzeichnet, dass** ein erster Sensor (S1) knapp unter dem Mindeststand der Flüssigkeit liegt und ein zweiter Sensor (S2) über diesem Mindeststand den Dampfraum überwacht.

13. Anlage nach Anspruch 12, **dadurch gekennzeichnet, dass** der zweite Sensor (S2) den Dampf auf Schaumfreiheit und / oder Reinheit überwacht.
